# EUROPÄISCHE PATENTSCHRIFT

(11) **EP 2 400 238 B1**
(45) Veröffentlichungstag und Bekanntmachung des Hinweises auf die Patenterteilung: **02.03.2016**
(21) Anmeldenummer: 11002863.6
(22) Anmeldetag: 06.04.2011
(51) Int. Cl.: F24J 2/52, F24J 2/22

(54) **Aufständerung eines Solarmoduls**
Support for a solar module
Elévation d'un module solaire

(30) Priorität: 22.06.2010 DE 102010024660
(43) Veröffentlichungstag der Anmeldung: 28.12.2011
(73) Patentinhaber: Weber, Stefan, 76275 Ettlingen (DE)
(72) Erfinder: Weber, Stefan, 76275 Ettlingen (DE)
(74) Vertreter: Wacker, Jost Oliver

(56) Entgegenhaltungen:
- EP-A2- 1 376 029
- DE-A1-102008 035 345
- DE-U1- 20 120 983
- DE-U1-202006 009 678
- DE-U1-202009 016 269
- DE-U1-202010 001 083
- DE-U1-202010 002 455
- JP-A- 11 022 126
- JP-A- 2007 211 399

## Beschreibung

Die Erfindung betrifft ein Aufständersystem für ein Solarmodul, nach dem Oberbegriff des Anspruchs 1, das für eine frei aufliegende Befestigung des Solarmoduls auf einem Dach mit keiner bis geringer Neigung geeignet ist, wie insbesondere auf einem Flachdach. Die Aufständerung weist hierzu Abstützmittel für die Erhöhung einer Seite des Solarmoduls auf, wodurch dieses in einer Schrägstellung positionierbar ist, die eine hohe Aufnahme von Sonnenenergie gewährleistet. An den Anstützmitteln sind dabei modulseitige Befestigungsmittel vorgesehen, die zur Befestigung der Aufständerung an einer Seite des Solarmoduls dienen. Zudem weist die Aufständerung eine Windabdeckung auf, mittels der durch Wind erzeugte Lasten reduziert werden können, die beispielsweise durch am Solarmodul angreifende Auftriebskräfte oder durch zusätzliche Schneelasten in Folge von zwischen dem schräg gestellten Solarmodul und dem betreffenden Dach eingewehten Schnee gebildet sein können. Dabei sind die Abstützmittel durch die Windabdeckung gebildet. Dabei ist die Windabdeckung durch ein Blech gebildet, das ein im Wesentlichen Z-förmiges Profil aufweist. Hierdurch weist die Windabdeckung eine besonders geeignete Form auf, um entlang einer ersten Richtung eine Abdeckfunktion zu übernehmen und gleichzeitig entlang einer quer zur ersten Richtung stehenden zweiten Richtung Gewichtskräfte abtragen zu können. Dabei ist es günstig, wenn das Z-förmige Profil einen ersten Endabschnitt, an dem das Solarmodul befestigbar ist, und einen bodenseitigen zweiten Endabschnitt aufweist.

Um ein möglichst großes Ertragspotential eines Solarmoduls sicherstellen zu können, muss dieses in einem gewissen Anstellwinkel gegenüber der Horizontalen angeordnet werden. Dieser beträgt beispielsweise in südlichen Teilen Deutschlands bei Südausrichtung etwa 15 bis 45°.

Um auch an Dächern mit einer geringeren Neigung, wie insbesondere an Flachdächern, ein hohes Ertragspotential einer Solaranlage gewährleisten zu können, sind verschiedene Aufständerungssysteme bekannt, mittels denen die betreffenden Solarmodule in einem geeigneten Anstellwinkel gehalten werden können.

Eine am Markt erhältliche Aufständerung mit der Bezeichnung "Freiaufstellungs-Montagesystem TRIC F pro" sieht beispielsweise für jedes Solarmodul zwei Stützen vor, die an einem oberen Ende mit dem oberen Rand des betreffenden Solarmoduls und an einem unteren Ende mit einem Schienensystem verbunden sind, das auf dem jeweiligen Flachdach frei aufliegt. Als Windabdeckung dient ein Blech, dass mittels Selbstbohrschrauben an den beiden Stützen befestigt wird. An dem Blech ist ferner eine Art Rinne ausgebildet, die zur Aufnahme von Ballastierungsmitteln in Form von Randsteinen genutzt werden kann.

Die bekannte Aufständerung hat den Vorteil, dass die Solarmodule mit dieser frei aufliegend auf dem jeweiligen Flachdach montiert werden können. Die Standfestigkeit wird dabei allein durch das Eigengewicht der Module, der Aufständerung und gegebenenfalls durch die Ballastierung erreicht, so dass auf Befestigungsmittel verzichtet werden kann, die in das Dach eingelassen werden müssten. Hierdurch kann die Gefahr von Undichtigkeiten, beispielsweise in Folge von Durchdringen einer Dachhaut, vermieden werden.

Nachteilig an der bekannten Aufständerung ist, dass diese aus relativ vielen Einzelteilen zusammengesetzt werden muss und dadurch einen relativ hohen Montageaufwand erfordert. Zudem fallen bei der Befestigung der Windabdeckung Metallspäne an, die zu Verunreinigungen und Beschädigungen der Dachhaut führen können.

DE 10 2008 035 345 A1 zeigt eine Aufständerung, bei der die rückseitigen Abstützmittel ein Z-förmiges Profil aufweisen, dessen oberer Endabschnitt nach außen gerichtet ist und dessen unterer Endabschnitt an einer Kunststoffträgerbahn befestigt ist, auf der wiederum ein Schüttmaterial oder eine Dachbegrünung vorgesehen ist.

DE 20 2010 001083 U1 und DE 20 2009 016 269 U1 zeigen jeweils eine Aufständerung, bei der beide Abstützmittel aus einem gemeinsamen abgekanteten Blech hergestellt sind, wobei die Endabschnitte jeweils nach außen ragen und zur Befestigung des Solarmoduls dienen.

DE 20 2006 009 678 U1 zeigt eine Aufständerung, bei der die rückseitigen Abstützmittel in einer Ausführungsform ein Z-förmiges Profil aufweisen, dessen oberer Endabschnitt nach außen gerichtet ist und dessen unterer Endabschnitt direkt an einer Dachhaut befestigt ist.

JP 2007 211399 A und EP 1 376 029 A2 zeigen jeweils eine Aufständerung mit Hilfe wannenförmiger Abstützelemente. Diese weisen einen ersten Endabschnitt zur Befestigung des höher positionierten Randes eines ersten Solarmoduls und einen zweiten Endabschnitt zur Befestigung des tiefer positionierten Randes eines zum ersten Solarmodul benachbart angeordneten zweiten Solarmoduls auf.

JP 11 022126 A zeigt eine Aufständerung für Welldächer mit einem sägezahnförmigen Profil, das über entsprechend geformte Lagerkonstruktionen in den Wellen des jeweiligen Daches befestigt wird.

DE 20 2010 002 455 U1 zeigt eine Aufständerung gemäß dem Oberbegriff des Anspruchs 1 und eine Aufständerung für Solarmodule mit einem vorderen Längsträger und einem hinteren Längsträger, der zur Erzeugung einer Schrägstellung des aufzunehmenden Solarmoduls eine größere Höhe aufweist als der vordere Längsträger. Neben seiner Stützfunktion dient der hintere Längsträger dabei gleichzeitig als Windabdeckung und weist an seinem oberen Abschnitt einen nach innen gekröpften Abschnitt zur Aufnahme eines Kabelkanals auf. Der Abstand zwischen beiden Längsträgern ist dabei deutlich kürzer als eine Länge des aufzunehmenden Solarmoduls, um an diesem Kragabschnitte zu erzeugen, die innerhalb des Solarmoduls einen gewissen Momentenausgleich bewirken.

DE 201 20 983 U1 zeigt einen Modulträger für Solarmodule mit zwei Halteblechen, die sowohl als Abstützmittel als auch als Windabdeckung dienen. Beide Haltebleche weisen dabei einen,oberen Falz und zwei nach innen gebogene Flügel auf, wobei das Solarmodul am hinteren und vorderen Ende zwischen dem jeweiligen Falz und den jeweiligen Flügeln verkeilt wird.

Die Aufgabe der Erfindung ist es, bei einer gattungsgemäßen Aufständerung eines Solarmoduls den Montageaufwand weiter zu reduzieren und den optischen Eindruck des aufgeständerten Solarmoduls zu verbessern.

Diese Aufgabe wird durch eine Aufständerung mit den Merkmalen des Anspruchs 1 gelöst. Dabei sind an dem zweiten Endabschnitt des Z-förmigen Profils bodenseitige Befestigungsmittel vorgesehen. Dabei ist das Solarmodul an einer von der ersten Seite abgewandten zweiten Seite mit einem Lagerelement verbunden, das einen modulseitigen Abschnitt und einen bodenseitigen Abschnitt aufweist, die einen Lagerwinkel aufspannen, der 180° abzüglich des Montagewinkels beträgt. Hierdurch kann das Solarmodul bezüglich seiner Ausrichtung zur Sonne sowohl an seiner Vorderseite als auch an seiner Rückseite an einem Teil der Aufständerung montiert werden, dessen Ausrichtung dem vorgesehenen Anstellwinkel entspricht. Hierdurch kann der gewünschte Anstellwinkel bei der Montage des Solarmoduls besonders einfach und exakt eingerichtet werden. Zudem sind sowohl der zweite Endabschnitt als auch das Lagerelement hierbei mit einer Schienenkonstruktion verbunden. Hierdurch kann die gleichzeitig als Abstützmittel fungierende Windabdeckung mit weiteren Elementen der Aufständerung verbunden werden, die beispielsweise eine Verbindung zwischen den Windabdeckungen mehrerer Solarmodule erlaubt. Eine solche Schienenkonstruktion ermöglicht dabei die Verbindung der Aufständerungen mehrerer Solarmodule, wodurch eine höhere Standsicherheit erreicht werden kann. Zudem werden die Montage und die Positionierung der einzelnen Solarmodule durch die Verwendung einer derartigen Schienenkonstruktion deutlich vereinfacht. Insbesondere bei Verwendung handelsüblicher Schienen können dabei die Herstellungskosten der Aufständerung relativ gering gehalten werden. Durch diese Ausführung der Abstützmittel beziehungsweise der Windabdeckung wird die Zahl der für die Montage der Aufständerung und des daran im Anstellwinkel gehaltenen Solarmoduls benötigten Bauteile vermindert und der Montageaufwand deutlich reduziert. Zudem kann der optische Eindruck des aufgeständerten Solarmoduls erheblich verbessert werden. Hierbei weist die Schienenkonstruktion vorteilhafterweise zwei Schienen auf, die sich senkrecht zu einer Längserstreckungsrichtung der Windabdeckung erstrecken.

Dabei ist es günstig, wenn der erste Endabschnitt und der zweite Endabschnitt zueinander in einem Montagewinkel angeordnet sind, der an einen vorgesehenen Anstellwinkel für das Solarmodul angepasst ist. Der Montagewinkel kann dabei direkt oder unter Verrechnung einer vorgegebenen Dachschräge mit dem vorgesehenen Anstellwinkel übereinstimmen, der beispielsweise zwischen 15 und 45° beträgt. Hierdurch kann durch die Aufständerung ein geeigneter Anstellwinkel für das zu montierende Solarmodul vorgegeben werden. Auf diese Weise ist bei der Montage der Aufständerung und des daran gehaltenen Solarmoduls keine gesonderte Einstellung des Anstellwinkels nötig.

Vorteilhafterweise schließt dabei ein Mittelabschnitt des Z-förmigen Profils mit dem ersten Endabschnitt einen ersten Winkel von etwa 90° und mit dem zweiten Endabschnitt einen zweiten Winkel von etwa 90° zuzüglich des Montagewinkels ein. Auf diese Weise kann das Solarmodul zur Montage relativ stabil an die Aufständerung angelegt und dadurch leichter befestigt werden.

Dabei ist es besonders günstig, wenn im montierten Zustand des Solarmoduls der Mittelabschnitt des Profils mit einer rückseitigen Stirnfläche der hinteren Seite des am zweiten Endabschnitt montierten Solarmoduls bündig abschließt. Auf diese Weise werden die Angriffsflächen des aufgeständerten Solarmoduls, die von einer Windlast beaufschlagt werden können, minimiert und ein geschlossener optischer Eindruck des Gesamtsystems erzeugt.

Vorteilhafterweise sind die modulseitigen Befestigungsmittel durch Aufnahmeöffnungen gebildet, die in den ersten Endabschnitt des Z-förmigen Profils eingelassen sind. Hierdurch ist eine einfache Befestigung des Solarmoduls an der Auf ständerung über handelsübliche Schraubmittel möglich, insbesondere ohne zusätzliche Modulklemmen.

Zudem ist es günstig, wenn die Aufnahmeöffnungen wenigstens zwei Offnungspaare aufweisen, die jeweils in einem Abstand angeordnet sind, der einem Standardabstand zwischen jeweils zwei Befestigungsbohrungen eines handelsüblichen Solarmoduls entspricht. Hierdurch werden mindestens vier Aufnahmeöffnungen bereit gestellt, an denen somit wenigstens zwei unterschiedliche Solarmodule mit gegenseitig unterschiedlich beabstandeten Befestigungsbohrungen verschraubt werden können.

In einer weiteren vorteilhaften Ausführungsform weisen die bodenseitigen Befestigungsmittel wenigstens ein Langloch auf, an dem eine Hammerkopfschraube mit der Schienenkonstruktion verbunden ist. Hierdurch ist eine besonders einfache und flexible Befestigung der Windabdeckung an der Schienenkonstruktion möglich.

Dabei ist es besonders günstig, wenn sowohl die Aufnahmeöffnungen der Windabdeckung als auch die Aufnahmebohrungen des Lagerelementes direkt an Befestigungsbohrungen anlegbar sind, die an einem handelsüblichen Solarmodul vorgesehen sind. Hierdurch kann die Aufständerung ausschließlich mittels einfacher Schraubverbindungen und insbesondere ohne spezielle Verbindungsmittel, wie beispielsweise Modulklemmen, mit dem Solarmodul verbunden werden.

Vorteilhafterweise ist an einer sich quer zur ersten Seite erstreckenden Schrägseite des Solarmoduls eine im Wesentlichen dreieckige Seitenabdeckung vorgesehen. Hierdurch ist an wenigstens einer Schrägseite des aufgeständerten Solarmoduls beziehungsweise eines Solarmodulverbundes auch eine seitliche Windabweisung herstellbar, wodurch die durch Wind erzeugbaren Auftriebslasten an dem Solarmodul beziehungsweise dem Solarmodulverbund deutlich reduziert werden können. Zudem verleiht eine derartige Seitenabdeckung dem betreffenden Solarmodul beziehungsweise dem Solarmodulverbund eine geschlossene Form, durch die sich der optische Eindruck der Anlage deutlich verbessern lässt, insbesondere wenn an beiden beziehungsweise allen Schrägseiten des Solarmoduls beziehungsweise des Solarmodulverbundes gleichartige Seitenabdeckungen vorgesehen sind.

Zudem ist es günstig, wenn an der Windabdeckung eine Aufnahme für ein Ballastelement vorgesehen ist, wodurch das Eigengewicht der Aufständerung bedarfsweise erhöht werden kann, um eine ausreichende Standsicherheit zu gewährleisten.

Dabei ist es günstig, wenn die Aufnahme durch einen am bodenseitigen Endabschnitt vorgesehenen nach oben stehenden Randabschnitt begrenzt ist, der sich einstückig an das Z-förmige Profil der Windabdeckung anschließt. Hierdurch kann die Windabdeckung neben ihrer eigentlichen Abdeckfunktion und der zusätzlichen Abstützfunktion des Weiteren auch als Ballastaufnahme fungieren. Durch diese Vereinigung von drei Funktionen an einem Bauteil weist die Aufständerung eine minimale Anzahl von Einzelelementen auf, was wiederum einen minimalen Montageaufwand zur Folge hat.

In den Figuren ist eine beispielhafte Ausführungsform der Erfindung dargestellt. Es zeigen:
- Figur 1: eine perspektivische Ansicht eines Solarmoduls mit einer erfindungsgemäßen Aufständerung,
- Figur 2: eine Draufsicht auf einen Solarmodulverbund aus mehreren Solarmodulen gemäß Fig. 1,
- Figur 3: eine Seitenansicht der Aufständerung in Richtung III aus Fig. 1,
- Figur 4: einen Schnitt durch eine Windabdeckung der Aufständerung nach Fig. 3 in der Ebene einer Verschraubung,
- Figur 5: eine Draufsicht auf die Windabdeckung in Richtung V aus Fig. 4 in vereinzelter Darstellung,
- Figur 6: einen Schnitt durch ein Lagerelement der Aufständerung nach Fig. 3 in der Ebene einer Verschraubung,
- Figur 7: eine Draufsicht auf das Lagerelement in Richtung VII aus Fig. 6 in vereinzelter Darstellung,
- Figur 8: eine Ansicht zweier nebeneinander liegender und seitlich miteinander verbundener Solarmodule und
- Figur 9: eine Ansicht eines Solarmoduls bei direkter Festlegung der Aufständerung an einem Dach

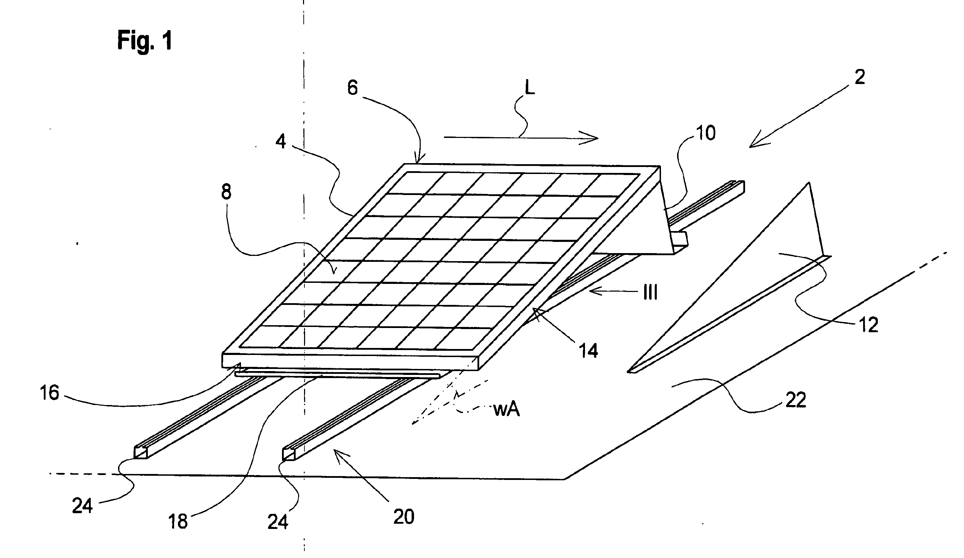

Fig. 1 zeigt eine Aufständerung 2 eines Solarmoduls 4, mittels der Letzteres an einer hinteren Seite 6 erhöht wird, um eine möglichst optimale Beaufschlagung mit Sonnenstrahlung erreichen zu können. Hierbei wird das Solarmodul 4 in einer Schrägstellung gehalten, in der eine Oberseite 8 des Solarmoduls 4 gegenüber der Horizontalen einen Anstellwinkel wA zwischen 15 und 45° einschließt.

Die Aufständerung 2 weist dabei eine Windabdeckung 10 auf, die an der hinteren Seite 6 befestigt ist. Die Windabdeckung 10 ist dabei als geschlossenes Blech ausgebildet, das neben seiner Wind abweisenden Funktion gleichzeitig als Abstützmittel fungiert, über das die gesamte an der hinteren Seite 6 auftretende Gewichtskraft des Solarmoduls 4 abgetragen wird.

Zur seitlichen Windabweisung ist zudem eine im Wesentlichen dreieckige Seitenabdeckung 12 vorgesehen, die an einer Schrägseite 14 des aufgeständerten Solarmoduls 4 festlegbar ist. Hierdurch kann zudem der optische Eindruck des aufgeständerten Solarmoduls 4 verbessert werden.

An einer von der hinteren Seite 6 abgewandten vorderen Seite 16 ist das Solarmodul 4 mit einem Lagerelement 18 der Aufständerung 2 verbunden. Sowohl die Windabdeckung 10 als auch das Lagerelement 18 sind zudem mit einer Schienenkonstruktion 20 verbunden, die lose auf einem Dach 22 aufliegt. Dabei sind die Windabdeckung 10 und das Lagerelement 18 mit zwei Schienen 24 der Schienenkonstruktion 20 verbunden, die sich senkrecht zu einer Längserstreckungsrichtung L der Windabdeckung 10 und des Lagerelements 18 erstrecken.

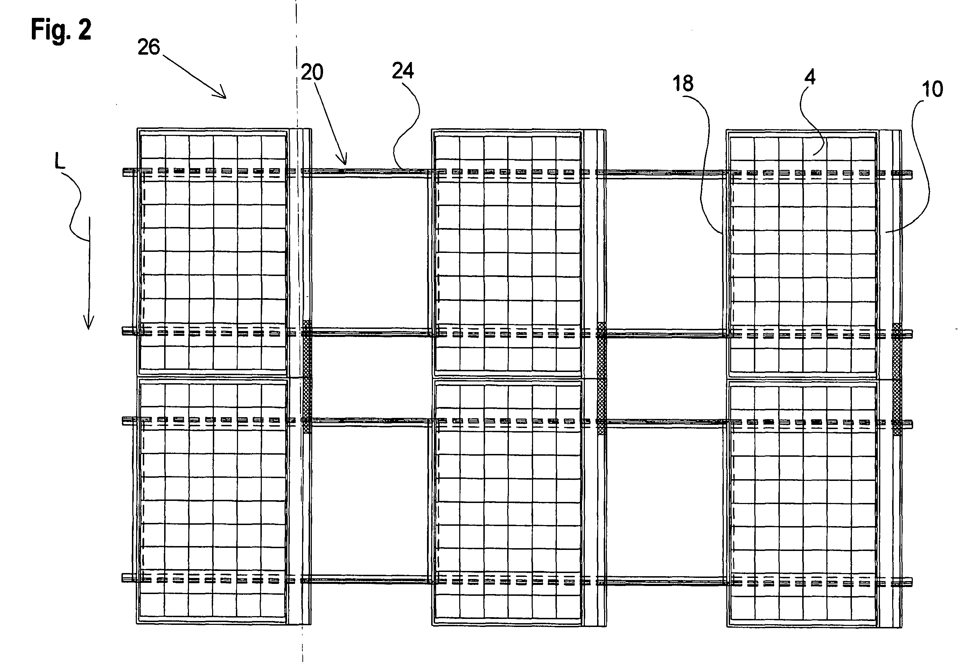

Fig. 2 zeigt einen Solarmodulverbund 26, der mehrere an der Schienenkonstruktion 20 hintereinander festgelegte Solarmodule 4 aufweist. Zudem können, wie dargestellt, wenigstens zwei Reihen von hintereinander angeordneten Solarmodulen 4 auch seitlich, das heißt in Längsrichtung L der Windabdeckungen 10 und der Lagermittel 18, miteinander verbunden werden. Durch die Bildung des Solarmodulverbundes 26 sind die einzelnen Solarmodule 4 auch bei freier Auflage rela tiv stabil gelagert. Zudem hinterlassen sie durch die gerade Anordnung sowohl in Längsrichtung L als auch in Querrichtung dazu, einen guten optischen Eindruck.

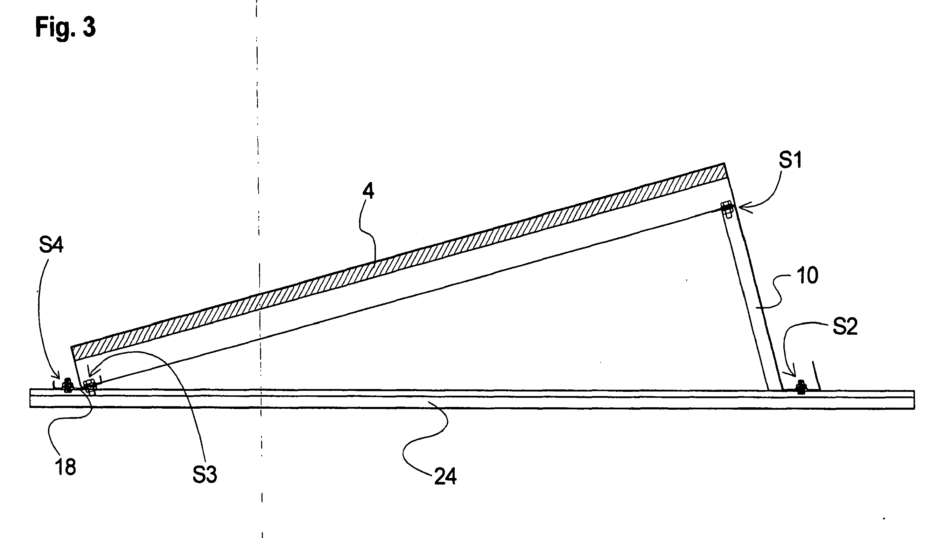

Wie aus Fig. 3 zu entnehmen ist, sind die Windabdeckungen 10 und das Lagerelement 18 sowohl mit dem Solarmodul 4 als auch mit der Schienenkonstruktion 20 über Schraubverbindungen S1, S2, S3 und S4 verbunden.

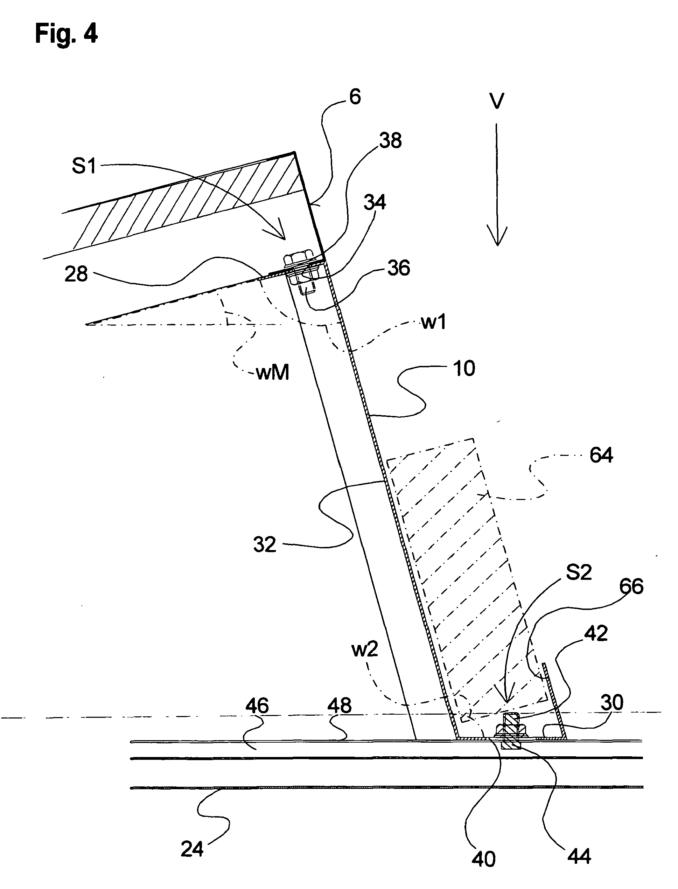

Die Windabdeckung 10 weist hierzu, wie insbesondere aus Fig. 4 zu entnehmen ist, ein Z-förmiges Profil mit einem modulseitigen ersten Endabschnitt 28 und einem schienenseitigen zweiten Endabschnitt 30 auf, die über einen Mittelabschnitt 32 verbunden sind. Der erste Endabschnitt 28 und der zweite Endabschnitt 30 stehen dabei zueinander in einem Montagewinkel wM, der dem vorgesehenen Anstellwinkel wA im Wesentlichen entspricht.

Der Mittelabschnitt 32 schließt dabei mit dem ersten Endabschnitt 28 einen ersten Winkel w1 von etwa 90° und mit dem zweiten Endabschnitt 30 einen zweiten Winkel w2 ein, der etwa 90° zuzüglich des Montagewinkels wM beträgt.

Zur Herstellung der Schraubverbindung S1 zwischen dem Solarmodul 4 und der Windabdeckung 10, sind in den ersten Endabschnitt 28 modulseitige Befestigungsmittel in Form von Aufnahmeöffnungen 34 eingelassen, an denen Verbindungsschrauben 36 festlegbar sind.

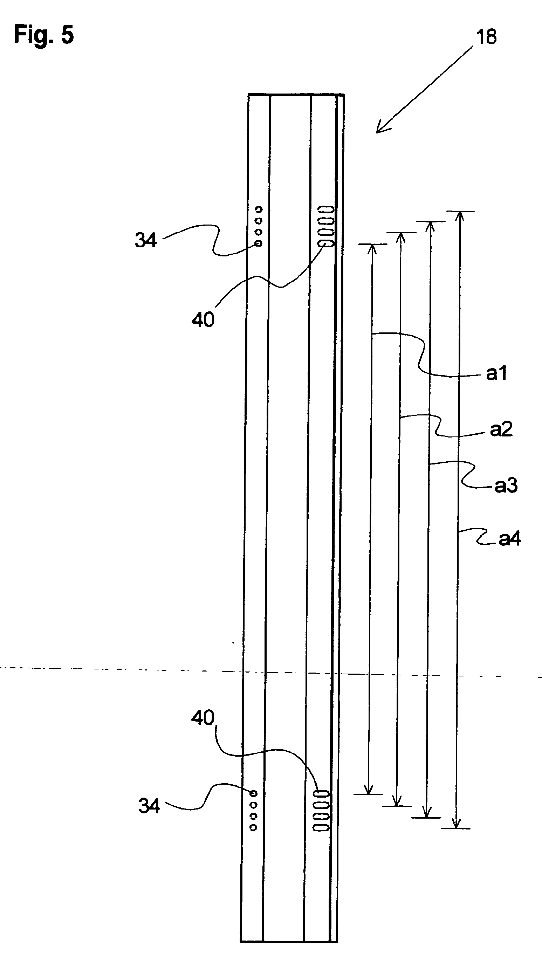

Wie aus Fig. 5 zu entnehmen ist, können hierbei mehrere Paare von Aufnahmeöffnungen 34 vorgesehen werden, die jeweils in unterschiedlichen Abständen a1, a2, a3, a4 angeordnet sind. Hierdurch können an dem ersten Endabschnitt 28 unterschiedliche handelsübliche Solarmodule 4 verschraubt werden, die jeweils Befestigungsbohrungen 38 (siehe Fig. 4) mit unterschiedlichen Standardabständen aufweisen.

Die Befestigungsbohrungen 38 und die Aufnahmeöffnungen 34 des ersten Endabschnittes 28 sind dabei derart angeordnet, dass bei Herstellung der Schraubveibindung die hintere Seite 6 des Solarmoduls 4 bündig mit dem Mittelabschnitt 32 des Z-förmigen Profils der Windabdeckung 10 abschließt.

Wie aus Fig. 4 ferner zu entnehmen ist, sind zur Herstellung der Schraubverbindung S2 zwischen der Schienenkonstruktion 20 und der Windabdeckung 10 in den zweiten Endabschnitt 30 schienenseitige Befestigungsmittel in Form von Langlöchern 40 eingelassen, an denen Hammerkopfschrauben 42 festlegbar sind. Die Hammerkopfschrauben 42 ermöglichen dabei eine variable Fixierung der Windabdeckung 10 entlang der jeweiligen Schiene 24, wobei ein Hammerkopf 44 durch das jeweilige Langloch 40 hindurch in einen Schlitz 46 der Schiene 24 verlagert und durch Verdrehen in eine Position verbracht wird, in der er zwei Randabschnitte 48 der Schiene 24, die den Schlitz 46 begrenzen, hintergreift.

Wie aus Fig. 5 zu entnehmen ist, können auch mehrere Paare von Langlöchern 40 vorgesehen werden, die jeweils in den unterschiedlichen Abständen a1, a2, a3, a4 angeordnet sind. Hierdurch können an dem zweiten Endabschnitt 30 die Schraubverbindungen S2 auf gleicher Höhe hergestellt werden, wie die Schraubverbindungen S1 am ersten Endabschnitt 28.

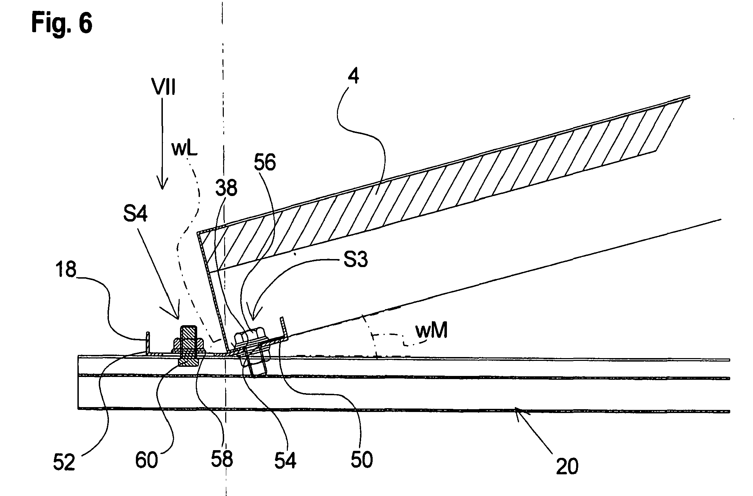

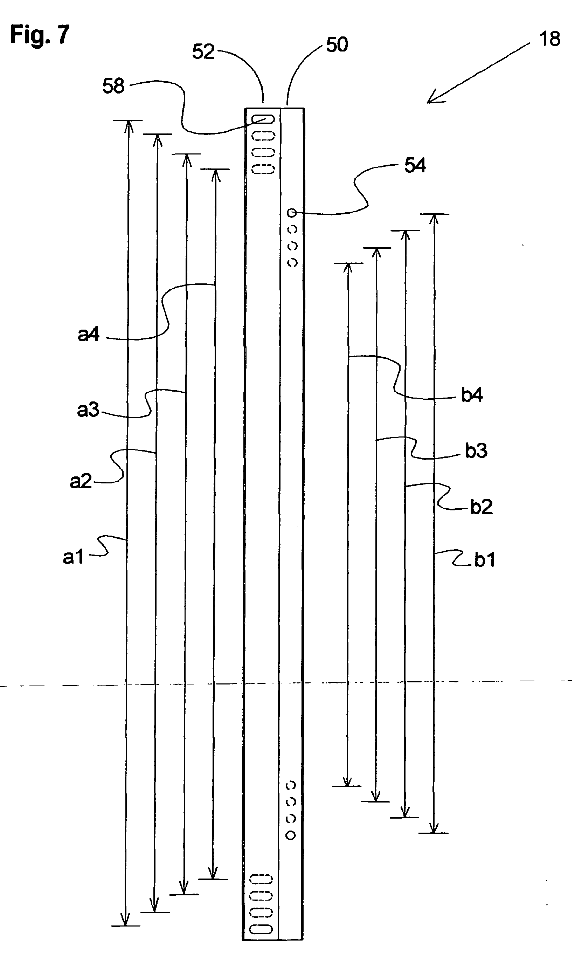

Wie aus Fig. 6 und 7 zu entnehmen ist, weist das Lagerelement 18 einen modulseitigen Abschnitt 50 und einen schienenseitigen Abschnitt 52 auf, die einen Lagerwinkel wL aufspannen, der im Wesentlichen 180° abzüglich des Montagewinkels wM beträgt. Zur Herstellung der Schraubverbindung S3 zwischen dem Solarmodul 4 und dem Lagerlement 18 sind in den modulseitigen Abschnitt 50 Aufnahmebohrungen 54 eingelassen, an denen Verbindungsschrauben 56 festlegbar sind. Zur Herstellung der Schraubverbindung S4 zwischen der Schienenkonstruktion 20 und dem Solarmodul 4 sind zudem Langlöcher 58 in den schienenseitigen Abschnitt 52 eingelassen, an denen Hammerkopfschrauben 60 festlegbar sind.

Wie insbesondere aus Fig. 7 zu entnehmen ist, können auch am Lagerelement 18 mehrere Paare von Langlöchern 58 vorgesehen werden, die jeweils in den unterschiedlichen Abständen a1, a2, a3, a4 angeordnet sind. Hierdurch können die Schraubverbindungen S4 auf gleicher Höhe hergestellt werden, wie die Schraubverbindungen S1 und S2 der Windabdeckung 10.

Zudem können auch mehrere Paare von Aufnahmebohrungen 54 vorgesehen werden, die jeweils in unterschiedlichen Abständen b1, b2, b3, b4 angeordnet sind. Hierdurch können die Befestigungsbohrungen 38 (siehe Fig. 6) unterschiedlicher handelsüblicher Solarmodule 4 benachbart zu jeweils zwei der Aufnahmebohrungen 54 positioniert werden, um an diesen die Schraubverbindung S4 herzustellen.

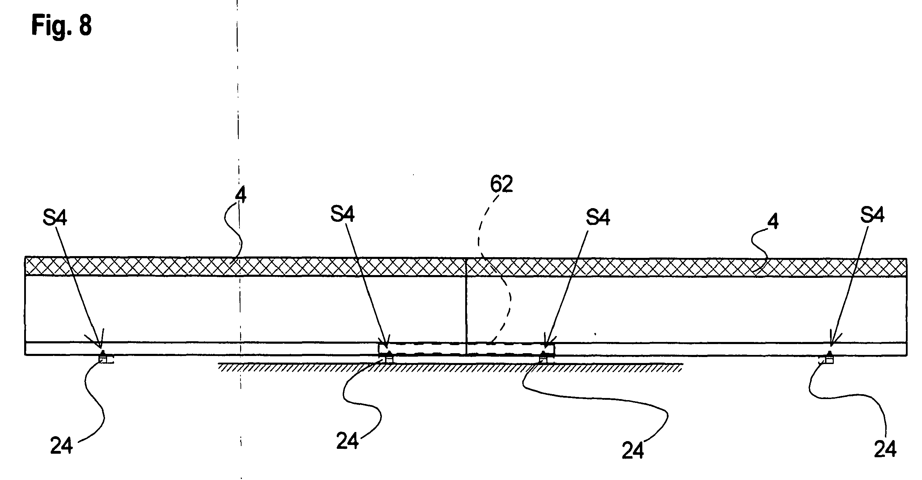

Zur stabilen seitlichen Verbindung zwischen zwei nebeneinander verlegten Reihen von Solarmodulen 4 kann zudem wenigstens ein Verbindungselement 62 vorgesehen werden, das jeweils an zwei benachbart angeordneten Schraubverbindungen S4 der beiden Reihen mit verschraubt ist. Auf diese Weise werden die beiden Reihen über das Verbindungselement 62 formschlüssig miteinander verbunden, wie aus Fig. 8 zu entnehmen ist.

Um die Standfestigkeit des frei aufliegenden Solarmodulverbundes 26 insgesamt zu erhöhen, können an den Windabdeckungen 10, wie aus Fig. 4 zu entnehmen ist, zudem Ballastelemente 64, wie beispielsweise handelsübliche Betonsteine, angebracht werden. Zur sicheren Aufnahme dieser Ballastelemente 64 weisen die Windabdeckungen 10 an den bodenseitigen zweiten Endabschnitten 30 jeweils einen nach oben stehenden Randabschnitt 66 auf, der zusammen mit dem jeweiligen zweiten Endabschnitt 30 und dem Mittelabschnitt 32 eine Aufnahme für das Ballastelement 64 bildet.

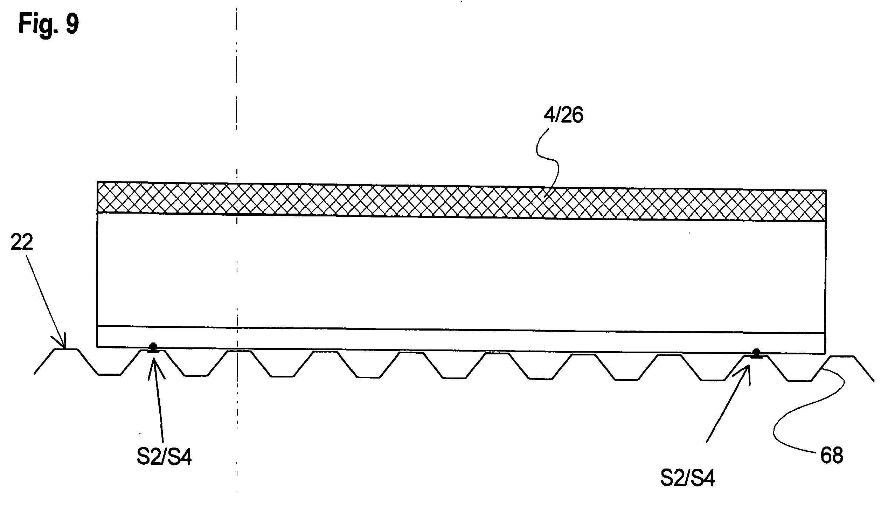

Alternativ zu der frei aufliegenden Montage des Solarmoduls 4 beziehungsweise des Solarmodulverbundes 26 ist es alternativ auch möglich, das wenigstens eine aufgeständerte Solarmodul 4 beziehungsweise zumindest Teile des aufgeständerten Solarmodulverbundes 26 direkt an dem Dach 22 festzuschrauben, wie in Fig. 9 beispielhaft anhand eines Daches 22 aus Trapezelementen 68 dargestellt. Die Schraubverbindungen S2 uns S4 werden hierzu ohne Zwischenlage der Schienenkonstruktion 20 direkt zwische der Windabdeckung 10 bezeihungsweise dem Lagerelement 18 und dem Dach 8 hergestellt. Um hierbei die Dichtigkeit des Daches 22 zu erhalten, können die Schraubverbindungen S2, S4 unter Zwischenlage handelsüblicher Dichtungsmittel hergestellt werden.

Zudem können unabhängig davon, ob eine Schienenkonstruktion verwendet wird oder nicht, handelsübliche Dicht-/Trennmittel, wie insbesondere Kunststoffmatten oder -Bahnen, als Korrosionsschutz und/oder Dichtmaterial zwischen der Aufständerung 2 und dem Dach 8 vorgesehen werden (nicht dargestellt).

## Patentansprüche

1. Aufständerung (2) eines Solarmoduls (4) für eine frei aufliegende Befestigung auf einem Dach (22) mit keiner bis geringer Neigung,
mit Abstützmitteln für die Erhöhung einer ersten Seite (6) des Solarmoduls (4) gegenüber einer von der ersten Seite (6) abgewandten zweiten Seite (16) des Solarmoduls (4) in einer Schrägstellung,
wobei an den Abstützmitteln modulseitige Befestigungsmittel zur Festlegung an der ersten Seite (6) des Solarmoduls (4) vorgesehen sind und das Solarmodul (4) an der zweiten Seite (16) mit einem Lagerelement (18) verbunden ist,
und mit einer Windabdeckung (10), mittels der durch Windeinfluss hervorrufbare Lasten reduzierbar sind, wobei die Abstützmittel durch die Windabdeckung (10) gebildet sind, und die Windabdeckung (10) durch ein Blech gebildet ist, das ein Z-förmiges Profil aufweist, das einen ersten Endabschnitt (28), an dem das Solarmodul (4) befestigbar ist, und einen bodenseitigen zweiten Endabschnitt (30) aufweist,
wobei an dem zweiten Endabschnitt (30) des Z-förmigen Profils bodenseitige Befestigungsmittel vorgesehen sind,
**dadurch gekennzeichnet, dass**
das Lagerelement (18) an der zweiten Seite (16) einen modulseitigen Abschnitt (50) und einen bodenseitigen Abschnitt (52) aufweist, die einen Lagerwinkel (mL) aufspannen, der 180° abzüglich des Montagewinkels (mw) beträgt,
wobei sowohl der zweite Endalschnitt (30) als auch das Lagerelement (18) mit einer Schienenkonstruktion (20) verbunden sind.

2. Aufständerung nach Anspruch 1, **dadurch gekennzeichnet, dass** die Schienenkonstruktion (20) zwei Schienen (24) aufweist, die sich senkrecht zu einer Längserstreckungsrichtung (L) der Windabdeckung (10) erstrecken.

3. Aufständerung nach Anspruch 1 oder 2, **dadurch gekennzeichnet, dass** der erste Endabschnitt (28) und der zweite Endabschnitt (30) zueinander in einem Montagewinkel (mW) angeordnet sind, der an einen vorgesehenen Anstellwinkel (mA) für das Solarmodul (4) angepasst ist.

4. Aufständerung nach einem der Ansprüche 1 bis 3, **dadurch gekennzeichnet, dass** ein Mittelabschnitt (32) des Z-förmigen Profils mit dem ersten Endabschnitt (28) einen ersten Winkel (w1) von etwa 90° und mit dem zweiten Endabschnitt (30) einen zweiten Winkel (w2) von etwa 90° zuzüglich des Montagewinkels (wM) einschließt.

5. Aufständerung nach Anspruch 4, **dadurch gekennzeichnet, dass** der Mittelabschnitt (32) des Z-förmigen Profils mit der ersten Seite (6) des am zweiten Endabschnitt (30) montierten Solarmoduls (4) bündig abschließt.

6. Aufständerung nach einem der Ansprüche 1 bis 5, **dadurch gekennzeichnet, dass** die modulseitigen Befestigungsmittel durch Aufnahmeöffnungen (34) gebildet sind, die in den ersten Endabschnitt (28) des Z-förmigen Profils eingelassen sind.

7. Aufständerung nach Anspruch 6, **dadurch gekennzeichnet, dass** die Aufnahmeöffnungen (34) wenigstens zwei Öffnungspaare aufweisen, die jeweils in einem Abstand (a1; a2; a3; a4) angeordnet sind, der jeweils einem Standardabstand zwischen zwei Befestigungsbohrungen (38) eines handelsüblichen Solarmoduls (4) entspricht.

8. Aufständerung nach einem der Ansprüche 1 bis 7, **dadurch gekennzeichnet, dass** die bodenseitigen Befestigungsmittel wenigstens ein Langloch (40) aufweisen, an dem wenigstens eine Hammerkopfschraube (42) mit der Schienenkonstruktion (20) verbindbar ist.

9. Aufständerung nach einem der Ansprüche 1 bis 8, **dadurch gekennzeichnet, dass** sowohl die Aufnahmeöffnungen (34) der Windabdeckung (10) als auch die Aufnahmebohrungen (54) des Lagerelementes (18) direkt an Befestigungsbohrungen (38) des Solarmoduls (4) anlegbar sind.

10. Aufständerung nach einem der Ansprüche 1 bis 9, **dadurch gekennzeichnet, dass** an einer sich quer zur ersten Seite (6) erstreckenden Schrägseite (14) des Solarmoduls (4) eine im Wesentlichen dreieckige Seitenabdeckung (12) vorgesehen.

11. Aufständerung nach einem der Ansprüche 1 bis 10, **dadurch gekennzeichnet, dass** an der Windabdeckung (10) eine Aufnahme für ein Ballastelement (64) vorgesehen ist.

12. Aufständerung nach Anspruch 11, **dadurch gekennzeichnet, dass** die Aufnahme durch einen am bodenseitigen Endabschnitt (30) vorgesehenen nach oben stehenden Randabschnitt (66) begrenzt ist.

## Claims

1. Support (2) for a solar module (4) for free-standing securing on a roof (22), with no or little inclination,
with support means for the raising of a first side (6) of the solar module (4) in relation to a second side (16) of the solar module (4), facing away from the first side (6), in an oblique position,
wherein, at the support means, module-side securing means are provided for securing to the first side (6) of solar module (4), and the solar module (4) is connected on the second side (16) to a bearing element (18),
and with a wind cover (10), by means of which the loads incurred by the influence of the wind can be reduced, wherein the support means are formed by the wind cover (10), and the wind cover (10) is formed by a sheet configured with a Z-shaped profile, which comprises a first end section (28), to which the solar module (4) can be secured, and a base-side second end section (30),
wherein, base-side securing means are provided at the second end section (30) of the Z-shaped profile,
**characterized in that** the bearing element (18) on the second side (16) comprises a module-side section (50) and a base-side section (52), which span a bearing angle (mL) which amounts to 180° less the mounting angle (mw),
wherein both the second end section (30) as well as the bearing element (18) are connected to a rail construction (20).

2. Support according to claim 1, **characterized in that** the rail construction (20) comprises two rails (24), which extend perpendicular to a longitudinal extension direction (L) of the wind cover (10).

3. Support according to claim 1 or 2, **characterized in that** the first end section (28) and the second end section (30) are arranged in relation to one another at an installation angle (mW) which is adjusted to a predetermined setting angle (mA) for the solar module (4).

4. Support according to any one of claims 1 to 3, **characterized in that** a middle section (32) of the Z-shaped profile with the first end section (28) encloses a first angle (w1) of some 90°, and with the second end section (30) encloses a second angle (w2) of some 90° plus the installation angle (wM).

5. Support according to claim 4, **characterized in that** the middle section (32) of the Z-shaped profile connects flush with the first side (6) of the solar module (4) mounted at the second end section (30).

6. Support according to any one of claims 1 to 5, **characterized in that** the module-side securing means are formed by accommodation openings (34), which are let into the first end section (28) of the Z-shaped profile

7. Support according to claim 6, **characterized in that** the accommodation openings (34) comprise at least two opening pairs, which in each case are arranged at a distance (a1; a2; s3; a4), which in each case corresponds to a standard distance interval between two securing holes (38) of a commercially conventional solar module (4).

8. Support according to any one of claims 1 to 7, **characterized in that** the base-side securing means comprise at least one longitudinal hole (40), at which at least one hammerhead screw (42) can be connected with the rail construction (20).

9. Support according to any one of claims 1 to 8, **characterized in that** both the accommodation openings (34) of the wind cover (10) as well as the accommodation holes (54) of the bearing element (18) can be laid directly at securing holes (38) of the solar module (4).

10. Support according to any one of claims 1 to 9, **characterized in that,** on an oblique side (14) of the solar module (4) extending transverse to the first side (6), an essentially triangular side cover (12) is provided.

11. Support according to any one of claims 1 to 10, **characterized in that** a mount for a ballast element (64) is provided at the wind cover (10)

12. Support according to claim 11, **characterized in that** the mount is delimited by a upward standing edge section (66) provided at the base-side end section (30).

## Revendications

1. Piètement (2) d'un module solaire (4) pour une fixation reposant à découvert sur un toit (22) avec aucune ou peu d'inclinaison,
comprenant des moyens de support pour l'élévation d'un premier côté (6) du module solaire (4) par rapport à un deuxième côté (16) du module solaire (4) opposé au premier côté (6), dans une position inclinée,
piètement dans lequel des moyens de fixation côté module sont prévus sur les moyens de support pour la fixation au premier côté (6) du module solaire (4), et sur le deuxième côté (16) le module solaire (4) est relié avec un élément d'appui (18),
et comprenant une protection au vent (10), permettant de réduire les charges provoquées par l'influence du vent, piètement dans lequel les moyens de support sont formés par la protection au vent (10), et la protection au vent (10) est formée par une tôle à profil en forme de Z, qui présente une première partie d'extrémité (28) à laquelle peut être fixé le module solaire (4), et une deuxième partie d'extrémité (30) côté sol,
des moyens de fixation côté sol étant prévus sur la deuxième partie d'extrémité (30) du profil en forme de Z,
**caractérisé en ce que** l'élément d'appui (18) sur le deuxième côté (16) présente une partie côté module (50) et une partie côté sol (52), qui définissent un angle d'appui (mL) qui est de 180° moins l'angle de montage (mw),
aussi bien la deuxième partie d'extrémité (30) que l'élément d'appui (18) étant reliés à une construction en rail (20).

2. Piètement selon la revendication 1, **caractérisé en ce que** la construction en rail (20) présente deux rails (24), qui s'étendent perpendiculairement par rapport à une direction de l'étendue longitudinale (L) de la protection au vent (10).

3. Piètement selon la revendication 1 ou 2, **caractérisé en ce que** la première partie d'extrémité (28) et la deuxième partie d'extrémité (30) sont agencées l'une par rapport à l'autre selon un angle de montage (mW), qui est adapté à un angle de pose (mA) prévu pour le module solaire (4).

4. Piètement selon l'une des revendications 1 à 3, **caractérisé en ce qu**'une partie intermédiaire (32) du profil en forme de Z présente avec la première partie d'extrémité (28) un premier angle (w1) de 90° et avec la deuxième partie d'extrémité (30) un deuxième angle (w2) de 90° plus l'angle de montage (mW).

5. Piètement selon la revendication 4, **caractérisé en ce que** la partie intermédiaire (32) du profil en forme de Z termine en affleurant le premier côté (6) du module solaire (4) monté sur la deuxième partie d'extrémité (30).

6. Piètement selon l'une des revendications 1 à 5, **caractérisé en ce que** les moyens de fixation côté module sont formés par des ouvertures de réception (34), qui sont pratiquées dans la première partie d'extrémité (28) du profil en forme de Z.

7. Piètement selon la revendication 6, **caractérisé en ce que** les ouvertures de réception (34) comprennent au moins deux paires d'ouvertures, agencées chacune suivant un écartement (a1 ;a2 ;a3 ;a4) qui correspond à un écartement standard entre deux trous de fixation (38) d'un module solaire (4) habituel dans le commerce.

8. Piètement selon l'une des revendications 1 à 7, **caractérisé en ce que** les moyens de fixation côté sol comprennent au moins un trou oblong (40), où au moins une vis à tête rectangulaire peut être reliée avec la construction en rail (20).

9. Piètement selon l'une des revendications 1 à 8, **caractérisé en ce que** aussi bien les ouvertures de réception (34) de la protection au vent (10) que les trous de réception (54) de l'élément d'appui (18) peuvent être appliqués directement sur des trous de fixation (38) du module solaire (4).

10. Piètement selon l'une des revendications 1 à 9, **caractérisé en ce qu'**une protection latérale (12) sensiblement triangulaire est prévue sur un côté incliné (14) du module solaire (4) s'étendant transversalement par rapport au premier côté (6).

11. Piètement selon l'une des revendications 1 à 10, **caractérisé en ce qu'**un logement pour un élément de ballast (64) est prévu sur la protection au vent (10).

12. Piètement selon la revendication 11, **caractérisé en ce que** le logement est délimité par une partie de bord (66) s'étendant verticalement vers le haut, prévue sur la partie d'extrémité (30) côté sol.
